# EUROPEAN PATENT APPLICATION

(11) **EP 2 098 322 A1**
(43) Date of publication of application: **09.09.2009**
(21) Application number: 08004083.5
(22) Date of filing: 05.03.2008
(51) Int. Cl.: B23H 7/10, B23H 7/36

(54) **Flushing device and method for a wire electric discharge machine**

(71) Applicant: AGIE SA, 6616 Losone (CH); CHARMILLES TECHNOLOGIES S.A., 1217 Meyrin 1 (CH)
(72) Inventor: Gruber, Hanspeter, 6616 Losone (CH); Budin, Josef, 6596 Gordola (CH); Lauber, Nikolaus, 6653 Verscio (CH); Baiardi, Giorgio, 6600 Locarno (CH)
(74) Representative: Samson & Partner

(57) **Abstract**

The invention provides an improved flushing for wire electric discharge machines in taper cutting by aligning the direction of flushing flow with the current cutting angle, while the wire guides maintain their vertical orientation. The orientation of the flushing flow is controlled by a parallelogram linkage mechanism mounted between the upper and the lower wire guiding head and acting on the orientable nozzle. The flushing fluid is conveyed and deflected by a swiveling funnel element having an independent spherical bearing seat so that the hydraulic forces produced by the pressure of the flushing fluid are not transmitted to the parallelogram linkage mechanism. Cutting speed, accuracy and surface quality in taper cutting operations is improved.

## Description

### Field of the Invention

The present invention relates generally to wire electric discharge machining (WEDM), i.e., machining of a workpiece by means of a wire electrode, and more specifically to an improved apparatus and method for flushing the working gap in the taper cutting mode of a wire electric discharge machine.

### Background of the Invention

In the process of wire electric discharge machining of a workpiece a wire electrode and a workpiece electrode are moved relative to each other, while material is removed by the action of electric discharge pulses, such that the desired contour is generated. The wire electrode is precisely guided by means of an upper and a lower wire guide comprised in upper and lower guiding heads, respectively. With the so called cylindrical WEDM cutting, both guiding heads proceed along the same path, while in taper WEDM cutting the wire guiding heads are displaced laterally with respect to each other so that the wire electrode is inclined relative to the normal of the surface of the workpiece.

One of the problems in electric discharge machining is to ensure efficient flushing of the working gap between the electrode wire and the workpiece, i.e. the interelectrode gap. In wire electric discharge cutting a conditioned flushing fluid jet surrounds the wire electrode to continuously eliminate the particles removed from the workpiece by the electric discharges, to dissipate the heat and to maintain a dielectric layer of low conductivity between the electrodes. The flushing fluid is supplied to the wire guiding head and is injected by flushing nozzles in the gap at a certain pressure, coaxially around the wire electrode, as substantially disclosed in DE 24 08 715 (ULLMANN).

Standard flushing nozzles used with universal WEDM are well suited for cylindrical and slightly tapered WEDM cutting, with the nozzle sliding on the workpiece so that the flushing fluid is conveyed into the working gap satisfactorily.

Efficient flushing is, however, difficult to achieve with tall workpieces, stepped workpieces, elaborated contours and tapered shape. In particular the problem of scarce supply of new flushing fluid to the gap exists with large cutting angles, because the fluid hits essentially the workpiece surface without penetrating the interelectrode gap. A certain improvement is achieved by adjusting the cutting parameters, but compared with a cylindrical cut the loss in performance is considerable.

It is known to provide a wire electric discharge machine with a device permitting to controllably position the wire guiding heads. For instance according to DE 30 41 612 (LODETTI) or DE 32 01 544 (SCHNEIDER) the wire guiding heads are always coaxial to each other and to the wire electrode. In this manner the wire electrode leaves the wire guide without any substantial deformation, so that the premises for high accuracy in taper cutting are given.

However, it is a remarkable challenge to control and precisely align the guiding heads, since every discontinuity in the wire guiding and feeding system may be the origin of grooves at workpiece level. Besides its function of guiding a tensioned traveling wire electrode the wire guiding head has many other primary functions, such as feeding current pulses to the wire electrode, forming a threading jet for the insertion of the wire electrode and providing a flushing flow to remove the erosion debris from the working gap. Moreover the wire guiding head may comprise many auxiliary functions, i.e. the so called shear function to cut the wire electrode when needed, sensing functions, as for instance the detection of the tip of the wire electrode, the detection of workpiece top surface for the purpose of alignment, and so forth. All the cables and hoses connected with the wire guiding heads narrow their mobility, so that particular attention must be paid to avoid excessive disturbing forces to act on the wire guiding heads.

From the above it becomes apparent that precisely orienting the wire guiding heads would particularly be advantageous for taper cutting with a wire electric discharge machine but the effort hereto is considerable. This explains why all wire electric discharge machine presently available on the market have fixed, non-orientable wire guiding heads.

Meanwhile the accuracy in taper cutting by using fixed wire guiding heads has been considerably improved by the implementation of correction algorithms. Despite of these effects the problem of poor flushing remains, particularly with large taper cutting angles.

It is also known to replace the standard nozzles with special flushing nozzles. For example, US 5,384,443 (SWARTZBAUGH) provides improved flushing for several special machining operation, where standard flushing is not suitable. The embodiment represented in Fig. 5 and 6 of US 5,384,443 shows a simple pivotable nozzle without any driving means, thus applicable with a fixed cutting angle.

It is further known to control the orientation of a flushing nozzle by means of drives, so that the nozzles are always aligned to each other and coaxial with the wire electrode. JP 56-114628 (OBARA) discloses an orientable nozzle comprising first rotating means for the rotation around the vertical axis supported by a second rotating means for tilting. The orientation of the nozzle is controlled by a numerical control.

JP 61-090827 (FUTAMURA) comprises a pair of gimbals and drive means for aligning the flushing nozzles, while the wire guide remains in its position in the wire guiding head.

Both, OBARA and FUTAMURA provide for an efficient flushing of the interelectrode gap in taper cutting by continuously aligning the flushing nozzles, also with changing taper angle. However these solutions are comparably complex and delicate, since each wire guiding head comprises drives and cabling or transmission elements in the close vicinity of the wire guiding heads. A further problem is that the numerical control must be to control two additional axes.

Thus, there is a need to provide wire electric discharge machining with an improved but still simple flushing process for taper cutting.

### Summary of the Invention

A first aspect of the present invention is directed to a flushing device, according to the subject-matter of claim 1. Another aspect of the invention is directed to a wire electric discharge machine, according to the subject-matter of claim 17. The invention also provides a method for supplying a flushing fluid to a working gap of a wire electric discharge machine, according to the subject-matter of claim 18. Further aspects are set forth in the dependent claims, the following description and the drawings. Other features are inherent in the methods and products disclosed or will become apparent to those skilled in the art from the following detailed description of embodiments and its accompanying drawings.

### Brief Description of the Drawings

Embodiments of the invention will now be described, by way of example, and with reference to the accompanying drawings, in which:
- Fig. 1: is a general schematic view of a wire electric discharge machine.
- Fig. 2: is a general schematic view of a wire electric discharge machine with an arrangement of an embodiment of the instant invention.
- Fig. 3: is an enlarged partial schematic view of the machining area showing an orientable flushing according to the invention
- Fig. 4: is an enlarged partial schematic view of the machining area, showing an embodiment of orientable flushing in a taper cutting condition.
- Fig. 5: is an enlarged partial schematic view of the machining area, showing an embodiment of a simplified orientable flushing in a taper cutting condition.
- Fig. 6: is a schematic view of an embodiment of a parallelogram linkage mechanism of the orientable flushing device.
- Fig. 7: is a detailed schematic view of an embodiment of an orientable flushing nozzle.
- Fig. 8: is a detailed schematic view of an embodiment of the orientable flushing nozzle in a taper cutting condition.
- Fig. 9: is a detailed schematic view of an embodiment of the orientable flushing nozzle.
- Fig. 10: is a detailed schematic view of an embodiment of the orientable flushing nozzle.

### Description of the Preferred Embodiments

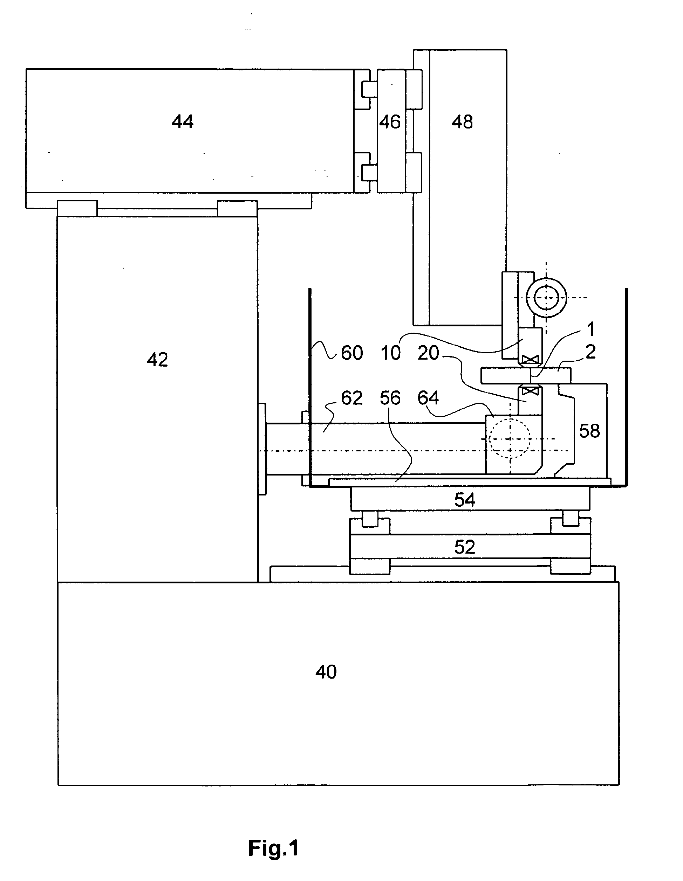

Before proceeding further with the detailed description of Figs. 1-10, however, a few general items of the preferred embodiments will be discussed first.

The embodiments as discussed hereinafter eliminate the aforementioned disadvantages of the prior art by providing a method for precise taper WEDM cutting with an improved flushing of simple constitution.

According to an embodiment, a flushing device is provided for supplying a flushing fluid to a working gap of a wire electric discharge machine comprising an upper wire guiding head and a lower wire guiding head which are adapted for an inclined guidance of a wire electrode through the working zone of the wire electric discharge machine. At the least one of the wire guiding heads comprises an orientable flushing nozzle for supplying the flushing fluid to the working gap, wherein the orientable flushing nozzle is pivotably arranged on the wire guiding head and is coupled to a linkage connecting the upper and the lower wire guiding heads or a part stationary thereto such that the orientation of the orientable flushing nozzle substantially adopts the inclination of the wire electrode.

An approximate alignment of the flushing nozzles with the orientation of the wire electrode leads to a considerable improvement of the flushing conditions while precise taper cutting with orientable wire guiding heads is obtained with a perfect guidance and control of the movements of the wire electrode.

The inventors have found that, according to some embodiments, with medium to large taper angle cutting operations it is advantageous to provide an orientable flushing device but having the wire guides fixedly mounted with the wire guiding heads and the wire guiding heads do not change their orientation. In these embodiments, the wire guides are fixedly supported while at least part of the flushing fluid directly hits into the working gap. The mechanism for the transmission of the axis movements by which the orientation of the flushing nozzle(s) is achieved does not need to be perfectly rigid.

According to some embodiments, the inventors have found that the function of absorbing the pressure of the flushing fluid and the function of transmission of the axis movements to the orientable flushing nozzle are preferably separated. The orientable flushing device is realized such that the hydraulic forces produced by the pressure of the flushing fluid are not carried by the mechanism transmitting the axis movements.

According to other embodiments, the invention provides a method of improved flushing of the working gap of wire electric discharge machines by aligning the direction of the flushing flow with the inclination of the current cutting angle of the wire electrode. In a further embodiment, the wire guiding heads maintain their vertical orientation in the taper cutting mode and a orientable flushing nozzle is pivotably arranged on the respective upper and/or lower wire guiding head.

In an embodiment, the orientation of the flushing flow is determined by a parallelogram linkage mechanism mounted between the upper and the lower wire guiding heads and acting on the slope angle of the orientable flushing nozzle. Thus, the pivotal movement of the orientable flushing nozzle is mechanically coupled with the displacement movement of the upper wire guiding head relative to the lower wire guiding head.

In a further embodiment, the flushing fluid is conveyed and deflected by a swiveling funnel element having an independent spherical bearing seat so that the hydraulc forces produced by the pressure of the flushing fluid are not transmitted to the parallelogram linkage mechanism. Cutting speed, accuracy and surface quality in taper cutting operations is improved.

### Now to the detailed description:

Fig. 1 is a simplified schematic view of a wire electric discharge machine having a C-frame design (generator, control, drives, wire transportation system as well as the electric, hydraulic and pneumatic connections are omitted for convenience). A wire electrode 1 is guided between an upper wire guiding head 10 and a lower wire guiding head 20 and a workpiece 2 is moved relative to the wire electrode 1 in an X/Y main axial plane. The movement in the X/Y direction is carried out by means of a coupled X/Y crosstable 52,54 which is mounted on a machine bed 40. On the crosstable arranged is a worktable 56, a stand 58 to support the workpiece 2 at the zero-height and a clamp (not shown). The lower wire guiding head 20 and a wire deflection unit 64 are supported by a lower wire guide arm 62, which in turn is rigidly connected with a vertical column 42. The upper wire guiding head 10 is carried by a quill 48 and by a second cross slide system 44,46. In this way the upper wire guiding head 10 is movable vertically in Z direction, and in a U/V axial plane, parallel with the X/Y main axial plane.

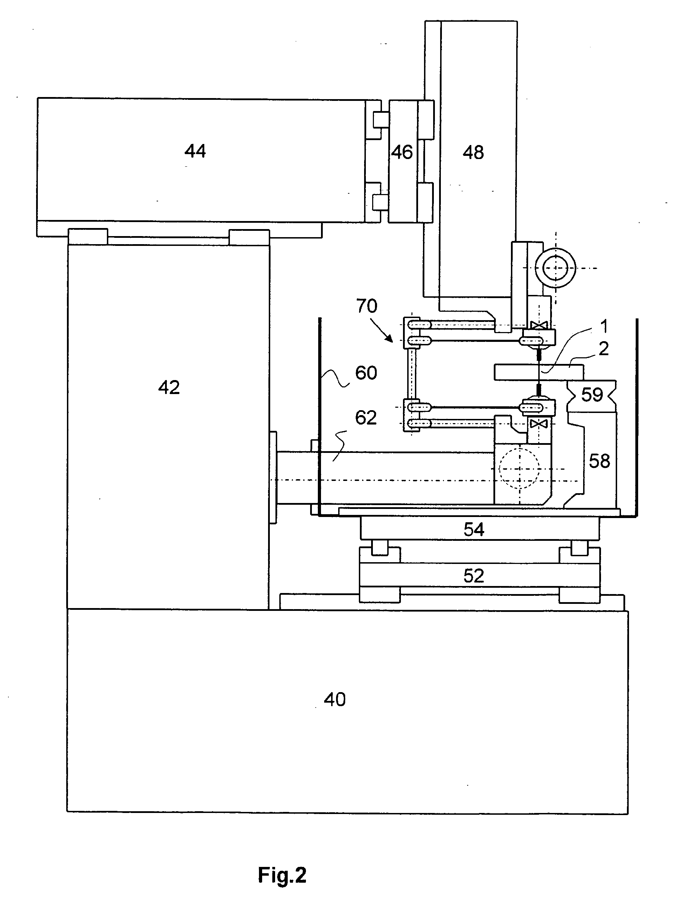

Fig. 2 shows the wire electric discharge machine of FIG. 1, comprising an orientable flushing device according to an embodiment of the instant invention. In order to perform taper cutting a predetermined taper cutting angle is set by moving the U/V cross slides 44,46 relative to the X/Y main axial plane required for inclined guidance of the wire electrode 1. In order to provide flushing of the interelectrode working gap an orientable flushing device is arranged comprising a parallelogram linkage mechanism 70 to establish a link between the relative movements of the upper and the lower wire guiding heads 10, 20 such that by moving the U/V cross slides 44, 46 the orientable flushing nozzles automatically adopt the inclination of the wire electrode 1. The inclination of the wire electrode 1 is determined by the displacement of the upper wire guiding head 10 relative to the lower wire guiding head 20.

As one can recognize by comparing Figs. 1 and 2, an orientable flushing device, according to an embodiment, can be installed on existing universal wire electric discharge machine by replacing few parts in the region of the machining heads. In a preferred embodiment the orientable flushing device is delivered as an optional kit or as retrofitting kit. In this manner a large number of customers can take advantage of the invention. Prior art orientable flushing devices as discussed are not suitable for quick installation, since all need the cabling of the wire electric discharge machine to be modified.

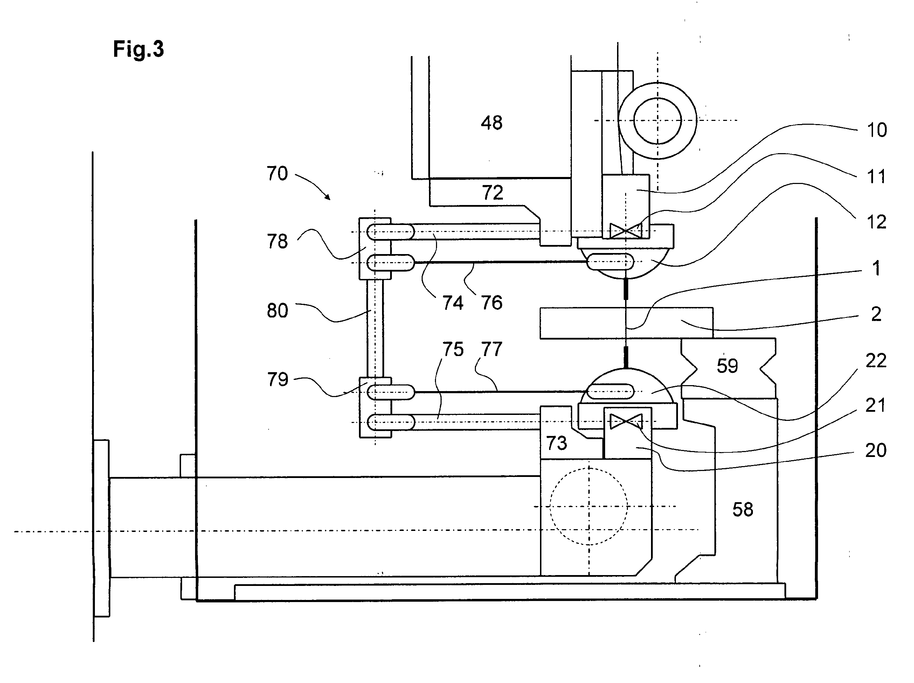

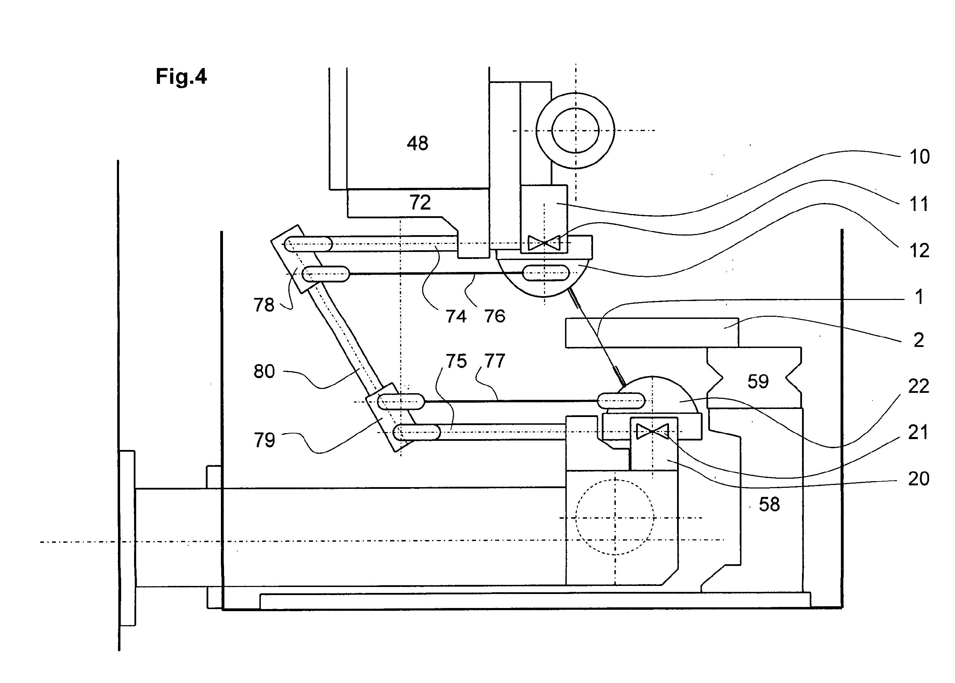

Fig. 3 and 4 illustrate an embodiment of the parallelogram linkage mechanism 70 in a cylindrical and a taper cutting condition respectively. An intermediate block 72 is mounted on the lower end of the quill 48, in proximity of the upper wire guiding head 10. A first horizontal bar 74 is mounted on the upper intermediate block 72, the block comprising a bearing (not shown) such that the horizontal bar 74 can rotate around its longitudinal axis. The elongation of the longitudinal axis of the first horizontal bar 74 concurs with the center of the upper wire guide 11. Likewise, a second horizontal bar 75 is mounted on a lower intermediate block 73 which in turn is carried by the lower arm of the wire electric discharge machine. The elongation of the longitudinal axis of the second horizontal bar 75 concurs with the center of the lower wire guide 11. The horizontal bars 74,75 comprise a fork end, respectively, which is swivel mounted with guide cups 78,79 on both ends of a connecting guide bar 80 so that the guide cups 78,79 can swing in two directions. In this embodiment the guide bar 80 is fixedly mounted with the lower guide cup 79 and slidably guided in the upper guide cup 78 to adapt its effective length to different taper cutting angles so that the guide cups 78,79 and the guide bar 80 are always aligned with each other. In an alternative embodiment (not shown) a telescopic guide bar is used.

One end of the horizontal control bars 76,77 is swivel mounted with the guide cups 78,79 and the other end is connected to an orientable flushing nozzle 12,22 which is pivotably arranged in each of the wire guiding heads. Each orientable flushing nozzle 12,22 comprises a spherical joint, its center of rotation concurring with the center of the respective wire guide 11,21. In this way the translational movement of the horizontal control bars 76,77 is transformed into a proportional rotation of the flushing nozzles 12, 22.

A predetermined taper angle of the wire electrode 1 is set by moving the U/V-axes as specified in the control program of the numeric control (see Fig. 4). The movement of the U/V-axes which is carried out by means of the cross slide system 44,46 is transmitted to the each of the orientable flushing nozzle 12,22 by means of the parallelogram linkage mechanism 70 so that the nozzles 12,22 are always aligned with the current taper angle of the wire electrode 1 and thus the fluid jet is coaxial with the wire electrode at any current taper angle.

In a preferred embodiment the extent of travel of the axes determining a relative movement between the upper and lower wire guiding heads (U/V-axes and Z-axis) is purposefully limited in consideration of the mobility of the components of the orientable flushing device, in particular, in the maximal travel of the parallelogram linkage mechanism 70 and/or in the maximal rotation angle of the orientable flushing nozzles 12,22. These limits are set and reset with the numeric control.

It can be difficult to install an orientable flushing device while keeping the lower face of the workpiece 2 at a zero-height given by the workpiece stand 58. This because the lower orientable flushing nozzle 22 is arranged between the wire guide 21 and the workpiece 2. According to another embodiment it is therefore advantageous to mount a spacer 59 to raise the zero-height of the workpiece, whereby interferences are excluded. The offset of the shifted 0-height is set accordingly with the numeric control, so that the programmed path is cut at the correct position.

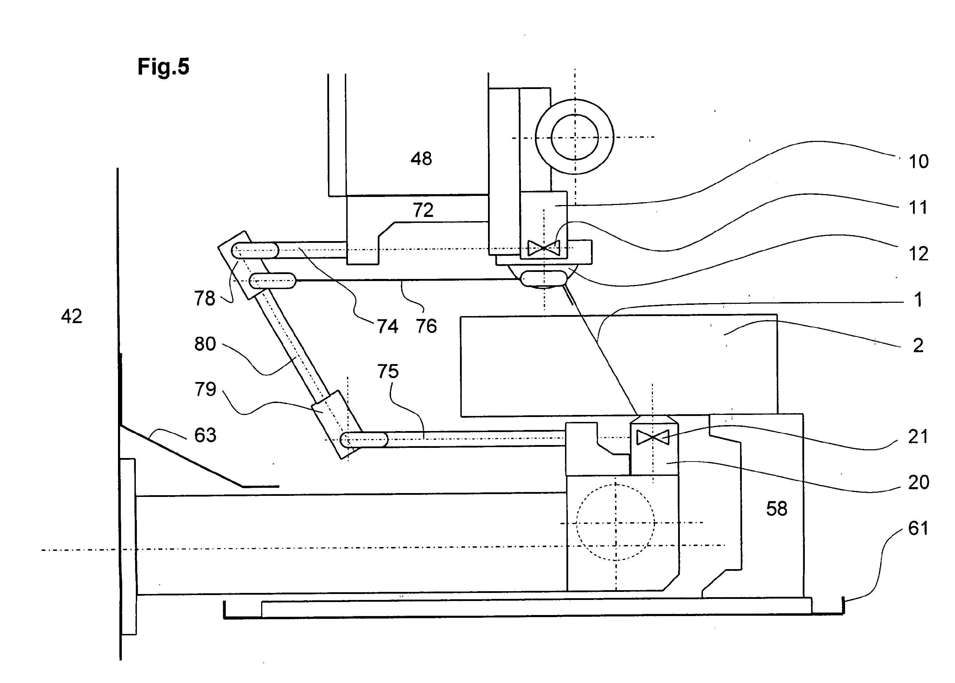

Fig. 5 illustrates another embodiment of the present invention with only one orientable flushing nozzle. Compared to the embodiment of Fig. 3 and 4, this embodiment has only an upper orientable flushing nozzle 12 and an associated horizontal control bar 76 linked with the parallelogram 74,75,78,79,80, but no lower orientable flushing nozzle 22 and therefore no horizontal control bar 77. In this embodiment the lower wire guiding head 20 can carry a standard flushing nozzle having a constant flushing direction. Since only the upper flushing nozzle 12 is always aligned with the wire electrode 1, the flushing fluid is supplied essentially through the upper head 10. Although the flushing flow ejected through the lower wire guiding head 20 is not coaxial with the wire electrode in case of taper cutting, this constitution has the advantage of a reduced space requirement.

According to this and other embodiments, to increase the space available for large workpieces the wire electric discharge machine is preferably operated in a non-submerged mode. Instead of a complete worktank this wire electric discharge machine has only a low basin 61 and a guard plate 63 to catch most of the splashes. In this case the movement of slide 52 is not limited by a worktank backwall (as shown in Fig. 3 and 4), so that the horizontal bars 74,75,76,77 of the parallelogram 70 can be prolonged considerably. Thus, much larger workpieces can be machined.

According to another similar embodiment the horizontal bar 75 is directly connected with the column 42. This solution is only possible with a wire electric discharge machine having a stationary lower wire guide 21.

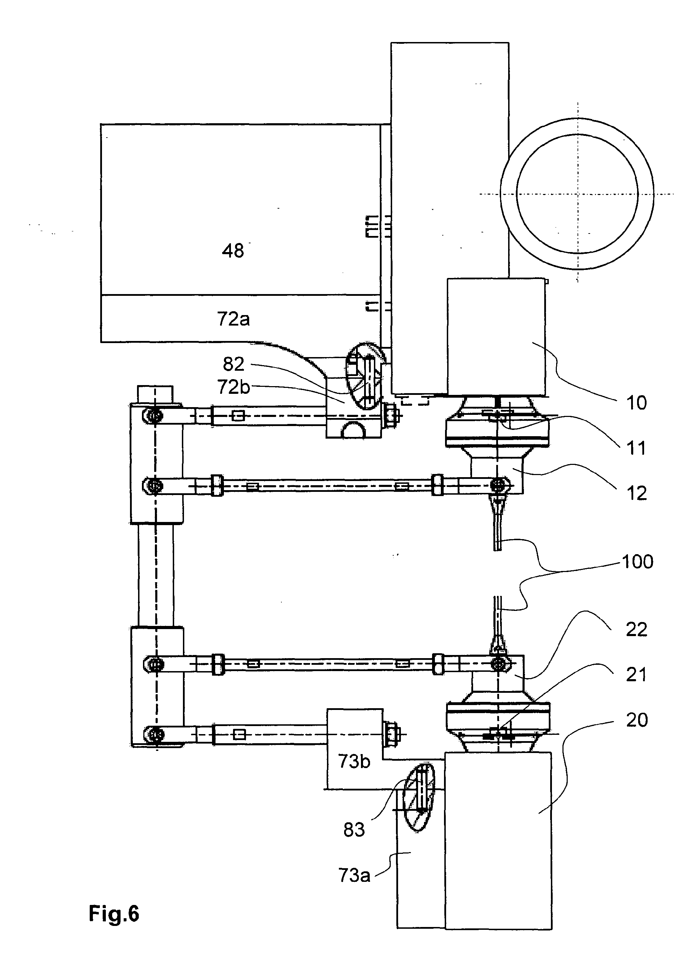

Fig. 6 illustrates an embodiment of the orientable flushing device which may be constituted to be quickly installed and demounted. The upper intermediate block 72 is split in at least two parts, with a first part 72a fixedly mounted with the quill 48, and at least a second part 72b releasably mounted with the first part 72a. The two parts of the intermediate block 72 comprise a joining surface with a geometric reference feature, e.g., an alignment pin hole. The alignment pin 82 ensures the correct positioning during the installation of the parallelogram 70. The lower intermediate block 73 is constructed in an analog way. When demounted, the parallelogram linkage mechanism 70 composed of the horizontal bars 74,75,76,77, guide bar 80, guide cups 78,79 and part of the orientable flushing nozzle are not disassembled. With this embodiment an universal wire electric discharge machine can be quickly converted to improve the flushing with difficult cutting conditions, in particular with large taper angles or stepped parts, and upon termination it can be quickly restored for normal cutting operation.

It is understood that the first part of the intermediate block 72,73 may be incorporated in the respective support, that is the first part of the upper intermediate block 72a may be part of the quill 48 and the first part of the lower intermediate block 73a may be integrated in the wire guide arm 62.

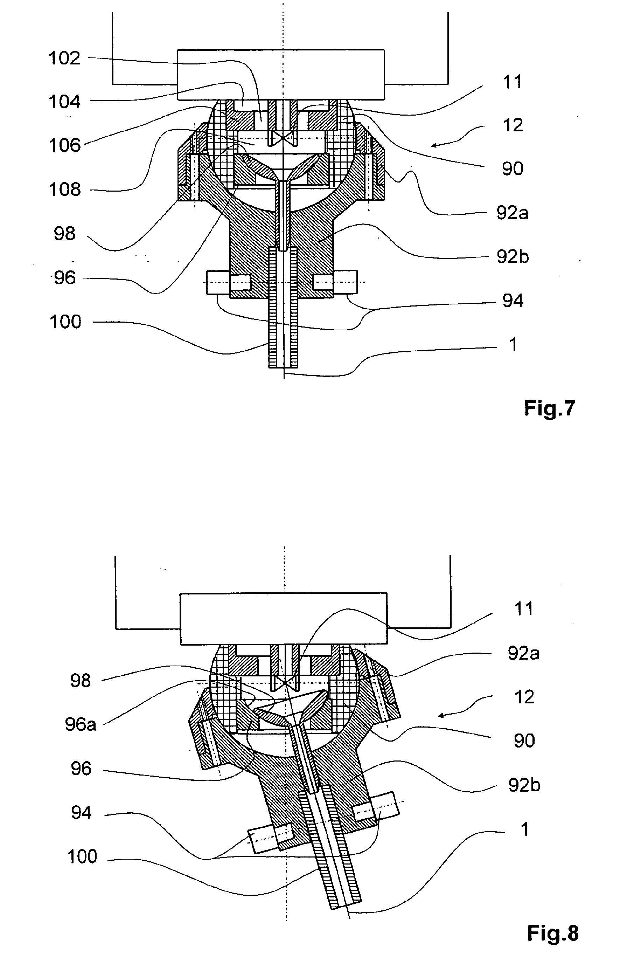

Fig. 7 and 8 show an embodiment of an upper orientable flushing nozzle 12 in a cylindrical and a taper cutting condition, respectively. A spherical bearing body 90 is screwed onto a wire guide support 106. The bearing shell 92 is composed of an upper portion 92a and a lower portion 92b, detachably connected by means of screws (not shown). The spherical bearing body 90 and the bearing shell 92 form the spherical joint. The spherical bearing body carries a socket 96 having a spherical seat 96a to accommodate an orientable funnel element 98. Alternatively, the spherical seat 96a may be integrated in the spherical bearing body. All orientable parts of the orientable flushing nozzle have essentially the same center of rotation, that is, the center of the wire guide 11. The bearing shell 92 carries a pipe element 100 which forms a flushing fluid jet surrounding the wire electrode 1. Preferably, the pipe element 100 has a slightly tapered profile, narrowing towards the outlet. The pipe element is replaceable to suit for each specific requirement. Also, the pipe element 100 has a weak point immediately after the bearing shell 92, i.e., it is designed to break when abnormal load is applied. This may occur with operating errors or collision.

Referring to Fig. 7, a mounting sequence, according to an embodiment of the invention, of the orientable flushing nozzle 12 will now be described, assuming that a standard flushing nozzle has already been removed form the wire guide support 106. The socket 96 is fixedly mounted in the spherical bearing body 90. The orientable funnel element 98 is inserted in the socket 96 and the upper portion 92a of the bearing shell is put on the spherical bearing body 90. The spherical bearing body 90 has an inner thread identical with the thread,of the standard flushing nozzle, so that it can be quickly mounted on the wire guide support 106. A parallelogram 70 is then mounted as explained with reference to Fig. 6. The upper and the lower portion 92a,92b of the bearing shell are coupled whereas the pipe section of the funnel element 98 is inserted in the central hole of the lower portion 92b of the bearing shell, and lastly the two bearing shell portions are bolt together.

The general operation of the orientable flushing device has been explained with reference to the embodiment of Fig. 2. Further, the coupling of the horizontal control bars to the orientable flushing nozzles has been illustrated with reference to the embodiment of Fig. 3 and 4. Referring now to the embodiment of Fig. 8 the operation of the orientation mechanism in the area of an orientable nozzle will now be explained in more detail. Reference numeral 94 represents the forked end portion of the horizontal control bar 76. The forked end portion comprises two pins to swivel mount the bearing shell 92. In this way the transversal movement of the horizontal control bar 76 is converted into a rotation of the bearing shell 92. The pipe section of the orientable funnel is guided in a hole of the lower portion 92b of the bearing shell. While rotating, the bearing shell 92 acts orthogonal to the longitudinal axis of the pipe section of the orientable funnel element 98, so that these parts are substantially aligned. Forces resulting from the fluid pressure in the fluid chamber 108 are not transmitted to the bearing shell 92, since they are mainly carried by the socket 96 and are lastly discharged to the upper wire guiding head 10 through the spherical bearing body 90.

In this embodiment the spherical bearing body 90, the bearing shell 92 and the parallelogram 70 are to be dimensioned for the transmission of the movements only, thus the function of absorbing the fluid pressure and the function of transmission of movements are separated. In this and other embodiments the orientable flushing device can be produced at reasonable cost.

Preferably the guide surface of the spherical bearing body 90 has vertical grooves (not shown) so that any fluid pressure built up in the bearing shell 92 is immediately exhausted.
Also, this precaution contributes to clean the surface of the spherical bearing body 90 such that it is free from any debris.

Referring to Fig. 7, the flow passageway of the flushing fluid will now be explained. The conditioned flushing fluid is fed to the wire guiding head through a pipe. It is then introduced into an annular chamber 104, flows through a number of uniformly distributed holes 102 of the wire guide support 106 and subsequently to a fluid chamber 108. It is then forced to pass through the funnel element 98 and finally through the pipe element 100. These measures provide for an intense and effective regeneration of the flushing fluid in the gap. The invention is particularly suitable for taper cutting operations requiring essentially high performance and medium to high surface quality and accuracy. Prior art orientable flushing devices are not capable to effectively feed the flushing fluid under high pressure, while ensuring unaffected wire electrode transportation.

Embodiments of the present invention are also particularly useful in applications where the workpiece has variable thickness or sudden changes in thickness such that the flushing conditions change suddendly. Standard flushing nozzles cannot be sealed on the surface of the workpiece so that they are quite ineffective. The invention prevents the occurrence of sudden changes in the flushing conditions because the flushing fluid jet is always oriented towards the working gap thus providing a reliable flushing. By using the orientable flushing according to embodiments of the invention the wire electric discharge machine can usually be operated in a non-submerged mode.

The funnel element 98 can slide with low friction in the spherical seat 96a. Precautions must be taken to hold the funnel element 98 in its position. According to an embodiment, the funnel element 98 is pressed against the spherical seat 96a by means of a spring (not shown). According to another embodiment, the funnel element 98 has a recessed groove and a pin (not shown) through the lower portion 92b of the bearing shell, so that the pin falls into said groove and thus reduces the longitudinal mobility of the funnel element 98.

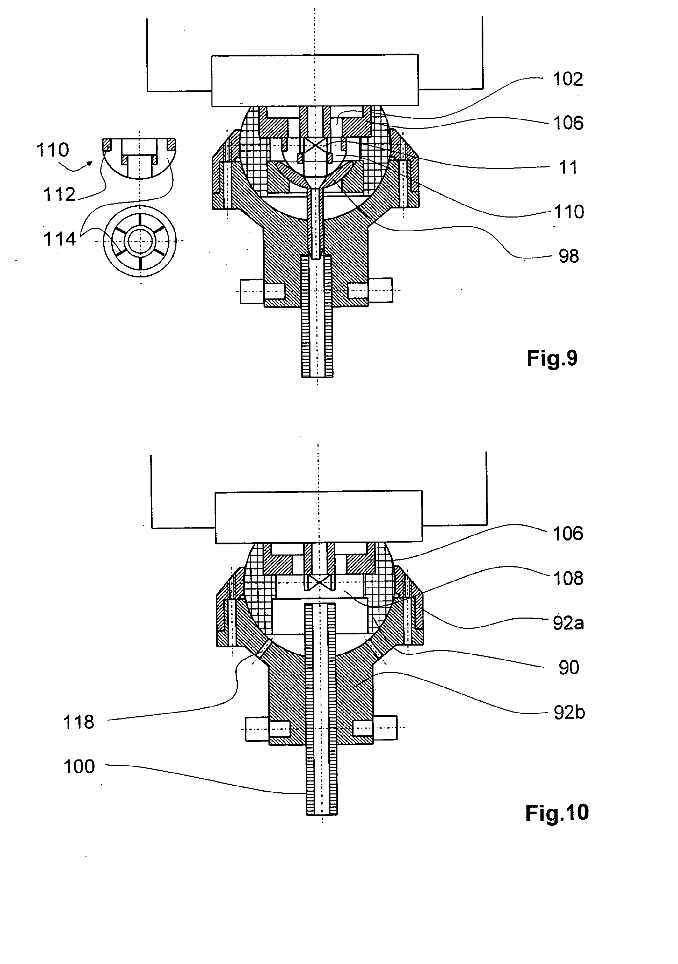

According to an alternative embodiment illustrated in Fig. 9, a ring shaped spacer 110 is used to maintain the funnel element 98 in the seat 96a. The spacer 110 has a central hole for the passage of the wire electrode and a number of passageways around the central hole, so that the flushing fluid discharged through the holes 102 of the wire guide support 106 can flow to the entrance of the funnel element 98. In this case the funnel element 98 has also a seat to match with the border of the spacer 110.

In a simplified embodiment the orientable nozzle does not comprise the socket 96 and the funnel element 98, so that the flushing fluid fills the whole chamber in the spherical bearing body 90, between the wire guide support 106 and the lower bearing shell 92b. However, in this case the fluid pressure acts on the comparably large projected surface of the lower bearing shell 92b. It is to be noted that flushing fluid pressures up to 2 MPa are used in wire electric discharge machining, so that this simplified solution applies only with limited pressures.

Another precaution to reduce the pressure acting on the lower bearing shell 92b is to install between the spherical bearing body 90 and the pipe element 100, e.g., an elastic membrane or a labyrinth-sealing. In this case the pipe element 100 extends up to the spherical bearing body 90. Further the lower bearing shell 92b may comprise one or more discharge bores 118 to reduce the forces acting on the spherical bearing.

It is understood that the invention is not limited in its application to the details of construction and the arrangement of the components set forth in the above description of embodiments or illustrated in the drawings. The invention is capable of including other embodiments or being carried out for similar configurations having the same function. For instance it is understood, that while the present specification often refers to an upper and a lower wire guide the present invention applies also to wire electric discharge machines having the wire traveling essentially horizontally through the machining area. Also, it is to be understood that the phraseology and terminology employed herein are for the purpose of description and should not be regarded as limiting.

All publications and existing systems mentioned in this specification are incorporated by reference.

Although certain devices and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A flushing device for supplying a flushing fluid to a working gap of a wire electric discharge machine comprising an upper wire guiding head (10) and a lower wire guiding head (20) which are adapted for inclined guidance a wire electrode (1) through the working zone of the wire electric discharge machine,
**characterized in that:**
at the least one of the wire guiding heads (10; 20) comprises an orientable flushing nozzle (12; 22) for supplying the flushing fluid to the working gap, wherein the orientable flushing nozzle (12, 22) is pivotably arranged on the wire guiding head (10, 20) and is coupled to a linkage (70) connecting the upper and the lower wire guiding heads (10, 20) or a part (72, 73) stationary thereto such that the orientation of the orientable flushing nozzle (12, 22) substantially adopts the inclination of the wire electrode (1).

2. The flushing device according to claim 1, wherein the upper wire guiding head (10) comprises an orientable flushing nozzle (12) and the lower wire guiding head (20) comprises an non-orientable flushing nozzle.

3. The flushing device according to claim 1 or 2, wherein the linkage (70) comprises a parallelogram linkage mechanism (74, 75, 80).

4. The flushing device according to one of the preceding claims, wherein the linkage (70) comprises a first horizontal bar (74) mounted to the upper wire guiding head (10) and a second horizontal bar (75) mounted to the lower wire guiding head (20) wherein the horizontal bars (74, 75) are coupled by means of a guide bar (80) which is variable in its effective length and swivelmounted on both free ends of the horizontal bars (74, 75), and at least one control bar (76, 77) swivel-mounted to the guide bar (80) on its one end and to the orientable flushing nozzle (12, 22) on its other end.

5. The flushing device according to claim 4, wherein at least one of the first and second horizontal bars (74, 75) is mounted to the respective wire guiding head through an intermediate block (72, 73).

6. The flushing device according to claim 5, wherein the intermediate block (72, 73) is composed of at least two assembling parts including a first part fixedly mounted on a wire guiding head support (48, 62) and at least a second part releasably mounted to the first part.

7. The flushing device according to one of the preceeding claims, wherein the orientable flushing nozzle (12, 22) comprises a spherical joint (90, 92) having its center of rotation in coincidence with the center of a wire guide arranged in the wire guiding head (10, 20).

8. The flushing device according to claim 7, wherein a spherical seat (96a) is provided in the spherical joint whereas the spherical seat carries an funnel element (98) which is adapted to pivot into the inclined position of the wire electrode (1).

9. The flushing device according to claim 8, wherein the funnel element (98) is biased against the spherical seat.

10. The flushing device according to claim 8 or 9, wherein the flushing fluid is conveyed to the working gap through the funnel element (98).

11. The flushing device according to claim 8 or 9, wherein the flushing fluid is conveyed and deflected by the swiveling funnel element having an independent spherical bearing seat such that the hydraulic forces produced by the pressure of the flushing fluid are not transmitted to the linkage mechanism.

12. The flushing device according to one of the claims 8 to 11, wherein a bearing shell (92) carries a pipe element (100) forming a flushing fluid jet surrounding the wire electrode (1).

13. The flushing device according to claim 12, wherein the pipe element (100) has a slightly tapered profile.

14. The flushing device according to claim 12 or 13, wherein the pipe element (100) has a weak point immediately after the position of the bearing shell (92).

15. The flushing device according to one of the claims 8 to 14, wherein the bearing shell comprises one or more discharge bores (118) to reduce the forces acting on the bearing shell.

16. The flushing device according to one of the preceeding claims, wherein the linkage (70) and the upper and the lower wire guiding heads (10, 20) or the part stationary thereto comprise joining surfaces and geometric reference features adapted for mounting and demounting.

17. A wire electric discharge machine comprising a flushing device according to one of the proceeding claims.

18. A method for supplying a flushing fluid to a working gap of a wire electric discharge machine comprising an upper wire guiding head (10) and a lower wire guiding head (20) which are adapted for inclined guidance a wire electrode (1) through the working zone, at least one orientable flushing nozzle (12, 22) pivotably arranged within the wire guiding head (10, 20) for supplying the flushing fluid to the working gap, the method comprising:
mechanically coupling the pivotal movement of the orientable flushing nozzle (12, 22) with the displacement movement of the upper wire guiding head (10) relative to the lower wire guiding head (20).
